# EUROPEAN PATENT APPLICATION

(11) **EP 2 005 834 A1**
(43) Date of publication of application: **24.12.2008**
(21) Application number: 07011770.0
(22) Date of filing: 15.06.2007
(51) Int. Cl.: A23C 19/00, A23C 19/068, A23C 19/09

(54) **Method of making cheese**

(71) Applicant: Invensys APV A/S, 8600 Silkeborg (DK)
(72) Inventor: Thorsen, Claus, 8600 Silkeborg (DK); Harbo, Erik Dath, 8210 Aarhus V (DK)
(74) Representative: Friese, Martin

(57) **Abstract**

The present invention relates to a method of making cheese comprising the following steps:
(a) supplying water, fat and powders containing whey protein and lactose-reduced dairy protein concentrates into a solid-liquid mixer,
(b) emulsifying and homogenising the content of the solid-liquid mixer,
(c) applying low-pressure or vacuum to the inner space of the mixer,

wherein step (b) and/or step (c) are performed until a paste-like emulsified homogenous pre-cheese mixture is obtained, and step (b) and/or step (c) are performed at a maximum temperature between 60°C and 85°C.

## Description

The present invention relates to a method of making cheese in accordance with the preamble of claim 1.

The paste-like emulsified homogenous pre-cheese mixture is to be used for making a traditional ripened cheese.

WO 2006/030128 A1 discloses a method of making cheese in accordance with the preamble of claim 1.

The whole disclosure of this publication is incorporated into the present application by reference.

The method of making cheese as known form WO 2006/030128 A1 is directed to using dairy powder instead of milk for making a traditional ripened cheese. The use of dairy powder instead of milk has the advantage that the method is independent of local raw milk availability. Furthermore there is no whey as a by-product of the cheese making.

This known method provides a continuous cheese process instead of the traditional batch cheese process. This is a time saving way of making cheese because of the continuous cheese making method.

Compared to the traditional cheese making methods, the method known from WO 2006/030128 A1 provides a space saving process line because the known method is running on the basis of cheese concentrate and not on raw milk as traditional methods of making cheese.

Compared to the traditional cheese making methods, the energy needed for performing the known method based on dairy powders instead of raw milk is reduced. For instance the pasteurising line capacity will only be 1/10 of a traditional cheese milk pasteurising line. It is clear, that the same proportional reduction of energy will be obtained.

Compared to traditional cheese making methods, another advantage is that the method is more hygienic and safe because according to the known method the process line can be provided as a closed process line whereas traditional cheese making lines are normally more open.

Compared to traditional cheese making methods, the method of this prior art is more simple, because the following equipment may be omitted in a cheese making apparatus: the cheese vat, the cheese whey first drain, the cheese whey second drain, a cutting device for cutting the cheese curd, a device for treating raw milk, and/or cheese pressing equipment.

However the known method has the disadvantage that the obtained pre-cheese mixture is dull grey and unstable to subsequent heat treatment used for pasteurisation or sterilisation.

Accordingly it is an object of the invention to provide a method of making cheese based on dairy powders which provides a more attractive white pre-cheese mixture which is stable to pasteurisation or sterilisation without separation.

This object is achieved with the features of the independent claims. Preferred embodiments of the invention are disclosed in the dependent claims.

According to one aspect of the invention there is provided a method of making cheese comprising the following steps:
(a) supplying water, fat and powders containing whey protein and lactose-reduced dairy protein concentrates into a solid-liquid mixer,
(b) emulsifying and homogenising the content of the solid-liquid mixer,
(c) applying low-pressure or vacuum to the inner space of the mixer, wherein
   - step (b) and/or step (c) are performed until a paste-like emulsified homogenous pre-cheese mixture is obtained, and
   - step (b) and/or step (c) are performed at a maximum temperature between 60°C and 85°C, and/or
   - step (b) and/or step (c) are performed at a shear rate of more than about 5,000/sec, preferably at a shear rate of more than about 7,500/sec, and more preferably at a shear rate of about 10,000/sec, and/or
   - step (b) and/or step (c) are performed at a shear rate of less than about 40,000/sec, preferably at a shear rate of less than about 20,000/sec, and more preferably at a shear rate of about 10,000/sec, and/or
   - step (b) and/or step (c) are performed until a phase conversion of the content of the solid-liquid mixer takes place, and/or
   - in step (b) and/or step (c) the temperature is raised until a phase conversion of the content of the solid-liquid mixer takes place, and/or
   - step (b) and/or step (c) are performed until an increase of the viscosity of the contents of the solid-liquid mixer is detected and/or the colour of the contents of the solid-liquid mixer turns white.

The method in accordance with the invention has the advantage, that a very stable pre-cheese mixture is obtained. The best results are obtained by applying a temperature of at least 60°C and high shear rates of at least 5,000/sec. Surprisingly it has been discovered that no phase separation takes place even in case high temperature treatments are made thereafter, like sterilisation etc..

It has surprisingly been noted that a phase conversion takes place at a temperature of about 60°C, especially when a high shear rate, for instance of about 10,000/sec is applied. After the phase conversion has taken place the temperature can stay on its maximum temperature or raised to the maximum temperature without risking a phase separation.

If the phase conversion takes place, the viscosity of the pre-cheese mixture increases dramatically. The increased viscosity can be easily detected. For instance a higher energy demand of the mixer is due to the increased viscosity. Therefore, the increased viscosity of the contents of the mixer and the higher energy demand is an indication that a phase conversion has taken place.

In accordance with the present invention step (b) and/or step (c) can be performed at a maximum temperature between 62°C and 80°C, preferably at a maximum temperature between 64°C and 77°C, more preferable at a maximum temperature between 65°C and 75°C, more preferable at a maximum temperature between 67°C and 73°C, and most preferred at a maximum temperature between 68°C and 72°C.

In accordance with the present invention in step (b) the temperature can be increased to the maximum temperature after an initial mixing has taken place.

In accordance with the present invention step (b) and/or step (c) can be performed for at least 10 Minutes, preferably for at least 20 Minutes and most preferred for about 30 Minutes.

In accordance with the present invention step (b) and/or step (c) can be performed until the cheese base turns white and there is a marked increase in viscosity, as evidenced by an increase in power consumption of the mixer.

In accordance with the present invention step (b) and/or step (c) can be performed for less than about 60 Minutes, preferably less than about 45 Minutes and most preferred for about 30 Minutes.

In accordance with the present invention in step (c) the vacuum can be applied to the head space of the mixer with the powder being introduced below the level of the liquid in the mixer. This prevents powder being sucked out by the vacuum.

In accordance with the present invention in step (c) a low-pressure or vacuum of less than about 2 mbar, preferably less than about 1 mbar and more preferably of about 0.5 mbar can be applied.

In accordance with the present invention step (b) and step (c) are performed at least partially simultaneously, simultaneously or one after the other.

In accordance with the present invention the paste-like emulsified homogenous pre-cheese mixture can be pasteurised. The pasteurisation can be performed in step (b) and/or step (c) and thereafter. If the pasteurisation is performed in step (b), the temperature is preferably raised to a first temperature, for instance 60°C, until the phase conversion takes place, and thereafter raised to a second temperature, for instance 65°C, where the pasteurisation takes place.

In the cheese production the milk is pasteurised, i.e. heated instantaneously to 68-73°C to kill bacteria that can destroy the cheese quality otherwise without affecting the ability of the casein to coagulate. The skilled person knows that temperatures in excess of 73°C cannot be applied, as it causes so considerable changes in the conditions of the milk protein, that the production of good-quality cheese is impossible.

During pasteurisation, vegetative bacteria are killed. However the spores of the bacteria are heat resistant and will not be killed by the temperatures pasteurisation is performed at. Butyric acid bacteria and other types of such bacteria can be detrimental for the fermentation of cheese. Accordingly it will be advantageous to eliminate the spores also from the pre-cheese mixture. For milk this is normally made by means of a mechanical separation or through the use of a membrane process described as microfiltration. Due to the higher density of spores it is possible to eliminate the spores from the milk using a centrifuge. However this separation method cannot be performed with the pasty-like pre-cheese mixture because of its high viscosity. Similarly, the use of microfiltration is not possible.

Accordingly it is another object of the invention to provide a method for making cheese wherein a better microbiological cheese quality is obtained.

The object of the invention is achieved by a method having the features of claim 16 and/or an apparatus with the features of claim 53 and/or 55. Preferred embodiments of the invention are disclosed in the dependent claims.

According to another aspect of the invention there is provided a method of making cheese comprising the following steps:
(a) supplying water, fat and powders containing whey protein and lactose-reduced dairy protein concentrates into a solid-liquid mixer,
(b) emulsifying and homogenising the content of the solid-liquid mixer,
(c) applying low-pressure or vacuum to the inner space of the mixer, wherein step (b) and/or step (c) are performed until a paste-like emulsified homogenous pre-cheese mixture is obtained, and
(d) sterilising the paste-like emulsified homogenous pre-cheese mixture.

Preferably this method of the invention may also comprise one or more of the features as mentioned above with regard to the other aspect of the invention.

In accordance with the present invention the paste-like emulsified homogenous pre-cheese mixture can be heated in step (d) at a temperature of more than about 120°C, preferably more than about 130°C, and more preferably at a temperature of about 140°C.

In accordance with the present invention the paste-like emulsified homogenous pre-cheese mixture can be sterilised in step (d) for more than about 1 second, preferably for more than about 2 seconds, and more preferably for about 3 seconds.

In accordance with the present invention the paste-like emulsified homogenous pre-cheese mixture can be sterilised in step (d) for than less 5 seconds, preferably for less than about 4 seconds, and more preferably for about 3 seconds.

In accordance with the present invention in step (d) steam infusion heating can be used for heating of the paste-like emulsified homogenous pre-cheese mixture.

In accordance with the present invention in step (d) the paste-like emulsified homogenous pre-cheese mixture can be preheated to a first heat treatment temperature and then heated to the final heat treatment temperature.

In accordance with the present invention the final heat treatment temperature can be a temperature of more than about 120°C, preferably more than about 130°C, and more preferably a temperature of about 140°C.

In accordance with the present invention the first heat treatment temperature can be a temperature of more than 75°C, preferable more than 80°C and more preferably of about 85°C.

In accordance with the present invention the first heat treatment temperature can be a temperature of less than 95°C, preferable less than 90°C and more preferably of about 85°C.

In accordance with the present invention in step (d) the paste-like emulsified homogenous pre-cheese mixture can be preheated by means of a surface heat exchanger, preferably by means of a scraped surface heat exchanger.

In accordance with the present invention in step (d) the paste-like emulsified homogenous pre-cheese mixture can be heated to the final heat treatment temperature by means of steam infusion heating. There is the advantage, that despite the high temperatures a gentle heat treatment can be performed because the intended temperature can be achieved in a very short time.

It has been surprisingly discovered that due to this gentle heat treatment by means of steam infusion a sterilisation of the paste-like emulsified homogenous pre-cheese mixture can be obtained and that the sterilised pre-cheese mixture can be used to make a traditionally ripened cheese with a better microbiological cheese quality.

The method in accordance with the present invention can also comprise the following step:
(e) cooling the heat treated paste-like emulsified homogenous pre-cheese mixture after step (d).

In accordance with the present invention in step (e) the paste-like emulsified homogenous pre-cheese mixture can be cooled by means of a heat exchanger, preferably by means of a scraped surface heat exchanger or flash cooled by means of the vacuum vessel of an infusion plant.

In accordance with the present invention in step (e) the temperature of the paste-like emulsified homogenous pre-cheese mixture can be cooled down to a temperature of less than about 45°C, preferably less than about 40°C.

In accordance with the present invention in step (e) the paste-like emulsified homogenous pre-cheese mixture can be cooled to a first cooling temperature and then cooled to a final cooling temperature.

In accordance with the present invention the final cooling temperature can be a temperature of less than about 45°C, preferably less than about 40°C.

In accordance with the present invention the first cooling temperature can be a temperature of more than 75°C, preferable more than 80°C and more preferably of about 85°C.

In accordance with the present invention the first cooling temperature is a temperature of less than 95°C, preferable less than 90°C and more preferably of about 85°C.

In accordance with the present invention in step (e) the heat treated paste-like emulsified homogenous pre-cheese mixture can be cooled down to the first cooling temperature by means of flash cooling, preferably by means of a flash vessel operated under vacuum.

In accordance with the present invention in step (e) the heat treated paste-like emulsified homogenous pre-cheese mixture can be cooled down to the final cooling temperature by means of a heat exchanger, preferably by means of a scraped surface heat exchanger..

The method in accordance with the present invention can also comprise the following step:
(f) adding production aids to the cooled paste-like emulsified homogenous pre-cheese mixture after step (e) and/or step (d).

In accordance with the present invention the production aids can comprise acidifying agents, fermenting agents and/or coagulating enzymes.

In accordance with the present invention the production aids can comprise acids, preferably beta glucono-lactone.

In accordance with the present invention the production aids can comprise mesophilic fermenting agents and/or thermophilic fermenting agents, preferably of the genus of Lactobacillus and/or Streptococcus.

In accordance with the present invention the production aids comprise a coagulating agent such as bovine or microbial rennet.

In accordance with the present invention adding production aids can be stopped before a break, preferably stopped at least for a period of time it takes the paste-like emulsified homogenous pre-cheese mixture to pass from the portion of the mixer where the production aids are added to the exit of the mixer. This provides the advantage, that no coagulation of the pre-cheese mixture will take place, because all pre-cheese mixture comprising production aids have been removed from the apparatus.

In accordance with the present invention the paste-like emulsified homogenous pre-cheese mixture exiting the mixer can be recirculated into the solid-liquid mixer of step (a) if the method is to be continued after a break, preferably recirculated at least for a period of time it takes the paste-like emulsified homogenous pre-cheese mixture to pass from the portion of the mixer where the production aids are added to the exit of the mixer. This provides the advantage that the pre-cheese mixture exiting the apparatus but not having production aids added can be reused and does not have to be discharged.

The method in accordance with the present invention can also comprise the following step:
(g) producing cheese using the paste-like emulsified homogenous pre-cheese mixture of step (c), step (d), step (e) and/or step (f).

In accordance with the present invention step (g) can include moulding, incubation, pressing, salting, ripening, removing the cheese from the mould or other steps known from the traditional way of making cheese.

In accordance with the present invention the paste-like emulsified homogenous pre-cheese mixture can have a dry matter content of 40 to 65% by weight and preferably 51-55% by weight.

In accordance with the present invention the paste-like emulsified homogenous pre-cheese mixture can comprise butyric acid fat, cream and/or vegetable fat.

In accordance with the present invention the powders containing whey protein and lactose-reduced dairy protein concentrates can have a lactose content of less than about 10% by weight.

In accordance with the present invention the powders containing whey protein and lactose-reduced dairy protein concentrates can have a native, non-denatured protein content of more than about 65% by weight.

In accordance with the present invention the powders containing whey protein and lactose-reduced dairy protein concentrates can when mixed have a resultant casein content of more than about 80% of total solids by proteins, preferably between 85 and 92% of total solids by proteins.

In accordance with the present invention the powders containing whey protein and lactose-reduced dairy protein concentrates and/or the paste-like emulsified homogenous pre-cheese mixture can have a casein to whey protein ratio of at least 85:15, preferably of at least 90:10 and most preferred of about 98:2 and/or a casein to whey protein ratio corresponding to that of traditional cheese.

In accordance with the present invention the total solid content of the paste-like emulsified homogenous pre-cheese mixture can be at least 40%, preferably at least 50% and most preferred about 55%.

In accordance with the present invention the total solid content of the paste-like emulsified homogenous pre-cheese mixture after flash cooling using an infusion plant can be about 65%.

According to one aspect of the invention there is provided a cheese making apparatus comprising a solid-liquid mixer and sterilisation means.

In accordance with the present invention the sterilisation means can comprise a steam infusion heating device.

According to one aspect of the invention there is provided a cheese making apparatus comprising a solid-liquid mixer and heating means, characterised in that the heating means include a steam infusion heating device.

Other characteristics and advantages will become clear from the following detailed description of exemplary embodiments in accordance with the invention.

The solid-liquid mixer used can be any mixer capable of mixing solids with liquids at the desired temperature and shear rate. For instance the FLEX-MIX PROCESSOR of Invensys APV may be used, preferably with the high shear rate impeller. The mixer should have sufficient power in order to provide a shear rate of at least 5,000/sec, preferable of at least 10,000/sec. There may be vacuum means for applying low pressure or vacuum at the head space of the solid-liquid mixer.

After the solid-liquid mixer there is preferably an in-line mixer. For instance the DAR mixer of Invensys APV may be used. A dosing pump is provided for dosing production aids (for instance rennet and starter) into the pre-cheese paste entering into the in-line mixer. The in-line mixer is provided for thoroughly mixing the production aids into the pre-cheese paste.

If pasteurisation of the pre-cheese mixture is desired, for instance a scraped surface heat exchanger may be used, being preferably connected between the solid-liquid mixer and the in-line mixer.

If sterilisation of the pre-cheese mixture is desired, for instance an infusion heating device, preferably in combination with a heat exchanger, for instance a scraped heat exchanger may be used, being preferably connected between the solid-liquid mixer and the in-line mixer.

The pre-cheese mixture exiting the in-line mixer preferably comprises dry matter content of 40 to 65%, and preferably of 55% by weight.

The casein to whey protein ratio of the pre-cheese mixture corresponds to the casein to whey protein ratio of the final cheese. Clearly, it is intended that the casein to whey protein ratio shall be the similar or slightly lower as for traditional cheese.

Form the exit of the in-line mixer the pre-cheese mixture is filled into moulds and treated as traditional cheese with the exception that no mechanical pressing is required. The skilled person is aware of these techniques.

As production aids coagulation enzymes (for instance rennet) and/or a chemical acidulant such as glucono-lactone may be added.

The sterilisation and/or heat treatment step may be carried out at a minimum temperature of 130°C, for instance for at least 3 seconds, or may utilise an equivalent treatment.

The pre-cheese mixture exiting the in-line mixer normally having a high viscosity, such that the pre-cheese mixture can directly been moulded into moulds or receptacles normally used by the skilled person for further treatment such as ripening etc..

In the moulds the pre-cheese mixture will coagulate because of the added production aids such as rennet.

To complete the coagulation and acidification, preferably an incubation step is following the step of moulding the pre-cheese mixture. During this step the cheeses are in their moulds and incubation takes place at a temperature of 28 to 31°C and a hygrometry rate of 99 to 100% for a period of time which can vary from a few hours to 20 hours, until a pH is obtained in the order of 5.3 to 4.8.

In accordance with the invention it will be possible to mould and directly portion cheeses in any desired shape and/or size. This technology enables a wide variety of unusual cheese shapes to be obtained owing to the removal of mechanical pressing.

After the incubation step has been completed, the cheeses are removed from the moulds and further steps may be performed the skilled person is aware of, for instance salting (in brine or using dry salt) and/or any treatments for obtaining rinds and/or special flavours etc..

If desired, other standard cheese-making techniques may be performed the skilled person is aware of.

The cheese obtained in accordance with the method and/or apparatus of the invention are almost identical to traditionally produced cheeses. However the cheeses are obtained by using powder instead of raw milk. Accordingly the production of cheese is very easy. Especially there is no need of remove any by-products as it is necessary in the traditional method for producing cheese.

In principle any variety of semi-hard or hard cheese analogue can be produced with the method and/or apparatus of the present invention.

It is clear that the description of the specific embodiments of the invention is not to be intended to limit the scope of protection which is defined by the claims. It is also clear that obvious alternatives which the skilled person will notice by reading the specification, are intended to be in the scope of protection as defined by the claims.

## Claims

1. A method of making cheese comprising the following steps:
(a) supplying water, fat and powders containing whey protein and lactose-reduced dairy protein concentrates into a solid-liquid mixer,
(b) emulsifying and homogenising the content of the solid-liquid mixer,
(c) applying low-pressure or vacuum to the inner space of the mixer,
wherein step (b) and/or step (c) are performed until a paste-like emulsified homogenous pre-cheese mixture is obtained,
**characterised in that** step (b) and/or step (c) are performed at a maximum temperature between 60°C and 85°C.

2. The method of claim 1, **characterised in that** step (b) and/or step (c) are performed at a maximum temperature between 62°C and 80°C, preferably at a maximum temperature between 64°C and 77°C, more preferable at a maximum temperature between 65°C and 75°C, more preferable at a maximum temperature between 67°C and 73°C, and most preferred at a maximum temperature between 68°C and 72°C.

3. The method of any of the preceding claims,
**characterised in that** in step (b) the temperature is increased to the maximum temperature after an initial mixing has taken place.

4. The method of any of the preceding claims or the preamble of claim 1, **characterised in that** step (b) and/or step (c) are performed at a shear rate of more than about 5,000/sec, preferably at a shear rate of more than about 7,500/sec, and more preferably at a shear rate of about 10,000/sec.

5. The method of any of the preceding claims or the preamble of claim 1, **characterised in that** step (b) and/or step (c) are at a shear rate of less than about 40,000/sec, preferably at a shear rate of less than about 20,000/sec, and more preferably at a shear rate of about 10,000/sec.

6. The method of any of the preceding claims,
**characterised in that** step (b) and/or step (c) are performed for at least 10 Minutes, preferably for at least 20 Minutes and most preferred for about 30 Minutes.

7. The method of any of the preceding claims,
**characterised in that** step (b) and/or step (c) are performed until the cheese base turns white and there is a marked increase in viscosity, as evidenced by an increase in power consumption of the mixer.

8. The method of any of the preceding claims,
**characterised in that** step (b) and/or step (c) are performed for less than about 60 Minutes, preferably less than about 45 Minutes and most preferred for about 30 Minutes.

9. The method of any of the preceding claims,
**characterised in that** in step (c) the vacuum is applied to the head space of the mixer with the powder being introduced below the level of the liquid in the mixer.

10. The method of any of the preceding claims,
**characterised in that** in step (c) a low-pressure or vacuum of less than about 2 mbar, preferably less than about 1 mbar and more preferably of about 0.5 mbar is applied.

11. The method of any of the preceding claims,
**characterised in that** steps (b) and (c) are performed at least partially simultaneously, simultaneously or one after the other.

12. The method of any of the preceding claims or the preamble of claim 1, **characterised in that** step (b) and/or step (c) are performed until a phase conversion of the content of the solid-liquid mixer takes place.

13. The method of any of the preceding claims or the preamble of claim 1, **characterised in that** in step (b) and/or step (c) the temperature is raised until a phase conversion of the content of the solid-liquid mixer takes place.

14. The method of any of the preceding claims or the preamble of claim 1, **characterised in that** step (b) and/or step (c) are performed until an increase of the viscosity of the contents of the solid-liquid mixer is detected and/or the colour of the contents of the solid-liquid mixer turns white.

15. The method of any of the preceding claims,
**characterised in that** the paste-like emulsified homogenous pre-cheese mixture is pasteurised.

16. The method of any of the preceding claims or the preamble of claim 1, **characterised by**:
(d) sterilising the paste-like emulsified homogenous pre-cheese mixture.

17. The method of the preceding claim, **characterised in that** the paste-like emulsified homogenous pre-cheese mixture is heated in step (d) at a temperature of more than about 120°C, preferably more than about 130°C, and more preferably at a temperature of about 140°C.

18. The method of any of the two preceding claims,
**characterised in that** the paste-like emulsified homogenous pre-cheese mixture is sterilised in step (d) for more than about 1 second, preferably for more than about 2 seconds, and more preferably for about 3 seconds.

19. The method of any of the three preceding claims,
**characterised in that** the paste-like emulsified homogenous pre-cheese mixture is sterilised in step (d) for than less 5 seconds, preferably for less than about 4 seconds, and more preferably for about 3 seconds.

20. The method of any of the four preceding claims,
**characterised in that** in step (d) steam infusion heating is used for heating of the paste-like emulsified homogenous pre-cheese mixture.

21. The method of any of the five preceding claims,
**characterised in that** in step (d) the paste-like emulsified homogenous pre-cheese mixture is preheated to a first heat treatment temperature and then heated to the final heat treatment temperature.

22. The method of the preceding claim, **characterised in that** the final heat treatment temperature is a temperature of more than about 120°C, preferably more than about 130°C, and more preferably a temperature of about 140°C.

23. The method of any of the two preceding claims,
**characterised in that** the first heat treatment temperature is a temperature of more than 75°C, preferable more than 80°C and more preferably of about 85°C.

24. The method of any of the three preceding claims,
**characterised in that** the first heat treatment temperature is a temperature of less than 95°C, preferable less than 90°C and more preferably of about 85°C.

25. The method of any of the four preceding claims,
**characterised in that** in step (d) the paste-like emulsified homogenous pre-cheese mixture is preheated by means of a surface heat exchanger, preferably by means of a scraped surface heat exchanger.

26. The method of any of the five preceding, claims,
**characterised in that** in step (d) the paste-like emulsified homogenous pre-cheese mixture is heated to the final heat treatment temperature by means of steam infusion heating.

27. The method of any of the preceding claims,
**characterised by**:
(e) cooling the heat treated paste-like emulsified homogenous pre-cheese mixture after step (d).

28. The method of the preceding claim, **characterised in that** in step (e) the paste-like emulsified homogenous pre-cheese mixture is cooled by means of a heat exchanger, preferably by means of a scraped surface heat exchanger or flash cooled by means of the vacuum vessel of an infusion plant.

29. The method of any of the two preceding claims,
**characterised in that** in step (e) the temperature of the paste-like emulsified homogenous pre-cheese mixture is cooled down to a temperature of less than about 45°C, preferably less than about 40°C.

30. The method of any of the three preceding claims,
**characterised in that** in step (e) the paste-like emulsified homogenous pre-cheese mixture is cooled to a first cooling temperature and then cooled to a final cooling temperature.

31. The method of the preceding claim, **characterised in that** the final cooling temperature is a temperature of less than about 45°C, preferably less than about 40°C.

32. The method of any of the two preceding claims,
**characterised in that** the first cooling temperature is a temperature of more than 75°C, preferable more than 80°C and more preferably of about 85°C.

33. The method of any of the three preceding claims,
**characterised in that** the first cooling temperature is a temperature of less than 95°C, preferable less than 90°C and more preferably of about 85°C.

34. The method of any of the four preceding claims,
**characterised in that** in step (e) the heat treated paste-like emulsified homogenous pre-cheese mixture is cooled down to the first cooling temperature by means of flash cooling, preferably by means of a flash vessel operated under vacuum.

35. The method of any of the five preceding claims,
**characterised in that** in step (e) the heat treated paste-like emulsified homogenous pre-cheese mixture is cooled down to the final cooling temperature by means of a heat exchanger, preferably by means of a scraped surface heat exchanger..

36. The method of any of the twenty preceding claims,
**characterised by**:
(f) adding production aids to the cooled paste-like emulsified homogenous pre-cheese mixture after step (e) and/or step (d).

37. The method of the preceding claim, **characterised in that** the production aids comprise acidifying agents, fermenting agents and/or coagulating enzymes.

38. The method of any of the two preceding claims,
**characterised in that** the production aids comprise acids, preferably beta glucono-lactone.

39. The method of any of the three preceding claims,
**characterised in that** the production aids comprise mesophilic fermenting agents and/or thermophilic fermenting agents, preferably of the genus of Lactobacillus and/or Streptococcus.

40. The method of any of the four preceding claims,
**characterised in that** the production aids comprise a coagulating agent such as bovine or microbial rennet.

41. The method of any of the five preceding claims,
**characterised in that** adding production aids is stopped before a break, preferably stopped at least for a period of time it takes the paste-like emulsified homogenous pre-cheese mixture to pass from the portion of the mixer where the production aids are added to the exit of the mixer.

42. The method of the preceding claim, **characterised in that** the paste-like emulsified homogenous pre-cheese mixture exiting the mixer is recirculated into the solid-liquid mixer of step (a) if the method is to be continued after a break, preferably recirculated at least for a period of time it takes the paste-like emulsified homogenous pre-cheese mixture to pass from the portion of the mixer where the production aids are added to the exit of the mixer.

43. The method of any of the preceding claims,
**characterised by**:
(g) producing cheese using the paste-like emulsified homogenous pre-cheese mixture of step (c), step (d), step (e) and/or step (f).

44. The method of the preceding claim, **characterised in that** step (g) includes moulding, incubation, pressing, salting, ripening, removing the cheese from the mould or other steps known from the traditional way of making cheese.

45. The method of any of the preceding claims,
**characterised in that** the paste-like emulsified homogenous pre-cheese mixture has a dry matter content of 40 to 65% by weight and preferably 51-55% by weight.

46. The method of any of the preceding claims,
**characterised in that** the paste-like emulsified homogenous pre-cheese mixture comprises butyric acid fat, cream and/or vegetable fat.

47. The method of any of the preceding claims,
**characterised in that** the powders containing whey protein and lactose-reduced dairy protein concentrates have a lactose content of less than about 10% by weight.

48. The method of any of the preceding claims,
**characterised in that** the powders containing whey protein and lactose-reduced dairy protein concentrates have a native, non-denatured protein content of more than about 65% by weight.

49. The method of any of the preceding claims,
**characterised in that** the powders containing whey protein and lactose-reduced dairy protein concentrates have when mixed a resultant casein content of more than about 80% of total solids by proteins, preferably between 85 and 92% of total solids by proteins.

50. The method of any of the preceding claims,
**characterised in that** the powders containing whey protein and lactose-reduced dairy protein concentrates and/or the paste-like emulsified homogenous pre-cheese mixture have a casein to whey protein ratio of at least 85:15, preferably of at least 90:10 and most preferred of about 98:2 and/or a casein to whey protein ratio corresponding to that of traditional cheese.

51. The method of any of the preceding claims,
**characterised in that** the total solid content of the paste-like emulsified homogenous pre-cheese mixture is at least 40%, preferably at least 50% and most preferred about 55%.

52. The method of any of the preceding claims,
**characterised in that** the total solid content of the paste-like emulsified homogenous pre-cheese mixture after flash cooling using an infusion plant is about 65%.

53. Cheese making apparatus comprising a solid-liquid mixer, **characterised by** sterilisation means.

54. Cheese making apparatus of the preceding claim, **characterised in that** the sterilisation means comprise a steam infusion heating device.

55. Cheese making apparatus comprising a solid-liquid mixer and heating means, **characterised in that** the heating means include a steam infusion heating device.
